# EUROPÄISCHE PATENTSCHRIFT

(11) **EP 0 621 701 B1**
(45) Veröffentlichungstag und Bekanntmachung des Hinweises auf die Patenterteilung: **11.07.2001**
(21) Anmeldenummer: 94105028.8
(22) Anmeldetag: 30.03.1994
(51) Int. Cl.: H04L 1/02, H04B 7/02

(54) **Verfahren und Anordnung zur Verringerung der Bitfehlerrate bei der Diversityübertragung digitaler Daten über Funk**
Method and apparatus for the reduction of the bit error rate in the diversity transmission of digital data radio
Procédé et dispositif pour la réduction du taux d'erreurs sur les bits dans la transmission en diversité de données numériques par radio

(30) Priorität: 01.04.1993 DE 4310644
(43) Veröffentlichungstag der Anmeldung: 26.10.1994
(73) Patentinhaber: EADS Deutschland GmbH, 81663 München (DE)
(72) Erfinder: Plattner, Alfred, Dipl.-Ing., D-89160 Dornstadt (DE); Nüssle, Gerhard, Dipl.-Ing., D-89134 Blaustein (DE); Schreiweis, Manfred, Dipl.-Ing., D-89134 Blaustein (DE)

(56) Entgegenhaltungen:
- WO-A-87/03717
- IEEE GERMAN CHAPTER WORKSHOP 1992, ILMENAU, (DE) A.PLATTNER "A MILLIMETREWAVE COMMUNICATION SYSTEM FOR

## Beschreibung

Die Erfindung betrifft ein Verfahren zur Verringerung der Bitfehlerrate bei der Übertragung digitaler Daten über Funk gemäß Oberbegriff des Patentanspruchs 1 sowie eine Anordnung zum Durchführen des Verfahrens gemäß Oberbegriff des Patentanspruchs 4.

Bei der digitalen Übertragung von Daten über Funk treten häufig Störungen auf, die die Übertragungsqualität der Signale herabsetzen und die insbesondere durch Fadingeinbrüche bzw. Mehr-Wege-Effekte hervorgerufen werden.

Mit Hilfe spezieller Funkübertragungsverfahren versucht man, diese Störungen zu beseitigen oder zumindest soweit zu verringern, daß eine möglichst fehlerfreie Datenübertragung stattfinden kann.

Bekannt sind Funkübertragungsverfahren, die fehlerkorrigierende Codes oder Entzerrungsverfahren (z.B. GSM) verwenden (vgl. hierzu z.B. Bernard Sklar: "Digital Communications - Fundamentals and Applications" (Prentice Hall, Englewood Cliffs (New Jersey) , 1988) Chapter 6: "Channel Coding - Part 2", Seiten 314-349). Bei der Übertragung von (personen)sicherheits-relevanten Daten - beispielsweise bei Betriebsleitfunksystemen für Eisenbahnen oder Magnetschwebebahnen - ist jedoch eine nachträgliche Fehlerkorrektur oder Entzerrung nicht zulässig.

Andere bekannte Funkübertragungsverfahrennutzen das Diversity-Prinzip und arbeiten im wesentlichen nach folgenden zwei Prinzipien: a) ein ausreichender Pegel des HF-Signals sollte eine fehlerfreie Datenübertragung garantieren und b) ein zweikanaliges Übertragungssystem sollte ausreichend gegen Fadingeinbrüche sein.

Ein Beispiel eines solchen HF-signalpegelabhängigen Funkübertragungsverfahrens für zwei Kanäle ist das aus dem Projekt TVE (Transrapid-Versuchsanlage-Emsland) bekannte und von A. Plattner: "A Millimetrewave Communication System for MAGLEV Application" (Vortrag auf dem IEEE German Chapter Workshop 1992 in Ilmenau) beschriebene Funkübertragungsverfahren, das in einem Betriebsleitfunksystem für die TVE-Versuchsfahrzeuge eingesetzt wird, bei dem mehrere ortsfeste Funkstationen ("Basisstationen") entlang der Fahrstrecke der Transrapid-Magnetschwebebahn verteilt angeordnet sind und in Funkverbindung mit einer mobilen Funkstation ("Mobilstation") stehen, die in dem Transrapid-Versuchsfahrzeug angeordnet ist. Während der Fahrt des Versuchsfahrzeugs entlang dieser Fahrstrecke treten die Basisstationen nacheinander in Funkkontakt mit der Mobilstation des Versuchsfahrzeugs und tauschen mit diesem Datentelegramme aus. Die Basisstationen senden ihre Funksignale auf einer ersten Frequenz fₒ₁, die Mobilstation sendet ihre Funksignale auf einer zweiten Frequenz fₒ₂ und dritten Frequenz fₒ₃. Dementsprechend empfängt die Mobilstation des Versuchsfahrzeugs Funksignale auf der Frequenz fₒ₁ und die Basisstationen empfangen Funksignale gleichzeitig auf den Frequenzen fₒ₂ und fₒ₃. Die drei Frequenzen fₒ₁ bis fₒ₃ liegen dabei im Millimeterwellengebiet.

Bei diesem bekannten System verbindet ein Modulationszubringer in Form eines Lichtwellenleiters die ortsfesten Basisstationen untereinander in Form einer Kette und die beiden Enden dieser Kette mit einer Funkzentrale. Die Mobilstation besteht aus einer digitalen Steuer- und Auswerteeinheit, an die zwei am Versuchsfahrzeug vorn bzw. hinten angeordnete Sende/Empfangsgeräte angeschlossen sind, von denen das eine auf der zweiten Frequenz fₒ₂ und das andere auf der dritten Frequenz fₒ₃ sendet und beide Geräte auf der ersten Frequenz fₒ₁ empfangen können. Dieses bekannte Funksystem stellt ein einkanaliges Funksystem dar, bei dem der Modulationszubringer einkanalig und die Basisstationen zweikanalig ausgeführt sind.

Bei mobilen Funksystemen dieser Art treten jedoch häufig Störungen auf, die von dem zuvor beschriebenen Funkübertragungsverfahren nicht zufriedenstellend beherrscht werden:
a) Durch Fadingeinbrüche werden Funkstörungen verursacht, welche sich als Absenkung des HF-Pegels und als Verzerrung des Datensignales bemerkbar machen.
b) Mehr-Wege-Effekte, verursacht durch Reflexionen des HF-Signales, bewirken nicht immer ein Absinken des HF-Pegels, jedoch eine Verzerrung des Datensignales.
c) Bei der Vorbeifahrt an gerichteten Antennen treten Lücken in der Funkversorgung auf.

Dies führt dazu, daß mit dem herkömmlichen Funkübertragungsverfahren vor allem schnelle Fadingeinbrüche nicht immer zuverlässig erkannt werden bzw. daß Mehrwege-Effekte infolge der Abhängigkeit vom HF-Signalpegel überhaupt nicht erkannt werden.

Darüber hinaus hat die Einkanaligkeit eines solchen Systems zur Folge, daß (selbst unter Verwendung von zweikanaligen Basisstationen)
d) bei Ausfall des Modulationszubringers das gesamte Funksystem ausfällt;
e) bei Ausfall einer Basisstation die Doppelausleuchtung ausfällt;
f) bei Ausfall eines Sende/Empfangsgeräts der Mobilstation die Funkdiversity ausfällt;
g) die Funkübertragung nur einkanalig ist und somit keine Kanalredundanz vorhanden ist;
h) ein Austausch von einzelnen Komponenten des Funksystems während des Betriebs ohne Unterbrechung der Funkverbindung nicht möglich ist.

Die Aufgabe der Erfindung besteht zum einen darin, ein Verfahren der eingangs genannten Art anzugeben, das in der Lage ist, die aus den Mehr-Wege-Effekten bzw. Fadingeinbrüchen resultierenden Übertragungsfehler zuverlässig zu erkennen und größtenteils zu korrigieren, und zum anderen darin, eine Anordnung zum Durchführen des Verfahrens anzugeben, die möglichst einfach im Aufbau ist und die möglichst ohne großen Aufwand in bereits bestehende Systeme integriert werden kann.

Die erfindungsgemäße Lösung der Aufgabe ist in bezug auf das zu schaffende Verfahren durch die kennzeichnenden Merkmale des Patentanspruchs 1 wiedergegeben und in bezug auf die zu schaffende Anordnung durch die kennzeichnenden Merkmale des Patentanspruchs 4.

Die übrigen Ansprüche enthalten vorteilhafte Aus- und Weiterbildungen des erfindungsgemäßen Verfahrens (Ansprüche 2 und 3) bzw. der erfindungsgemäßen Anordnung (Ansprüche 5 bis 8) sowie bevorzugte Anwendungen der Erfindung (Ansprüche 9 und 10).

Nach der Erfindung wird ein Verfahren zur Verringerung der Bitfehlerrate bei der Übertragung digitaler Daten über Funk mittels eines m-kanaligen Funksystems (m>2) dahingehend verbessert,
- daß in den einzelnen m Empfangskanälen:
   - zunächst aus den geträgerten Empfangssignalen die übertragenen Datensignale extrahiert werden;
   - anschließend die Datentaktrate ermittelt wird;
   - anschließend anhand der Datensignale und der Datentaktrate eine Kreuzkorrelation vorzugsweise für jedes Datenbit errechnet wird;

- daß im Anschluß daran vorzugsweise für jedes Datenbit die resultierenden Kreuzkorrelationswerte der einzelnen Empfangskanäle miteinander verglichen werden und für die weitere Verarbeitung des (der) Datenbits derjenige der m Empfangskanäle ausgewählt wird, der den höchsten Kreuzkorrelationswert für dieses Datenbit (diese Datenbits) aufweist.

Die wesentlichen Vorteile dieser Lösung bestehen darin, daß Datenverzerrungen infolge von Mehr-Wege-Effekten bzw. Fadingeinbrüchen problemlos erkannt und beseitigt werden können und daß in Mobilfunksystemen Übertragungsfehler infolge von Lücken in der Funkversorgung bei der Vorbeifahrt der Mobilstation an gerichteten Antennen der ortsfesten Basisstationen erkannt und korrigiert werden können.

Liegen die einzelnen Basisstationen sehr weit auseinander, können sich störende Laufzeitunterschiede der Signale in den einzelnen Empfangskanälen ergeben. Diese werden in einer vorteilhaften Weiterbildung des erfindungsgemäßen Verfahrens weitgehend dadurch kompensiert, daß Laufzeitunterschiede der Signale in den einzelnen Empfangskanälen vor der Ermittlung der Datentaktrate kompensiert oder zumindest weitgehend kompensiert werden.

Die bei den erfindungsgemäßen Verfahren vorgesehene Kreuzkorrelation zwischen den Datensignalen und der Datentaktrate kann besonders vorteilhaft dann durchgeführt werden, wenn bei der Durchführung der Kreuzkorrelationsberechnungen als Datencode der an sich bekannte Manchestercode verwendet wird (zum Manchestercode: vgl. z.B. Daniel Minoli: "Telecommunications Technology Handbook" (Artech House Inc., Norwood (Michigan), 1991) Seiten 482-483).

Im folgenden wird die Erfindung anhand der Figuren näher erläutert. Es zeigen:
- FIG. 1: das Prinzipschaltbild eines Betriebsleitfunksystem für spurgebundene Fahrzeuge mit mindestens einer erfindungsgemäßen Anordnung zum Durchführen des erfindungsgemäßen Verfahrens;
- FIG. 2: ein Blockschaltbild einer vorteilhaften Ausführungsform der erfindungsgemäßen Anordnung gemäß FIG. 1.

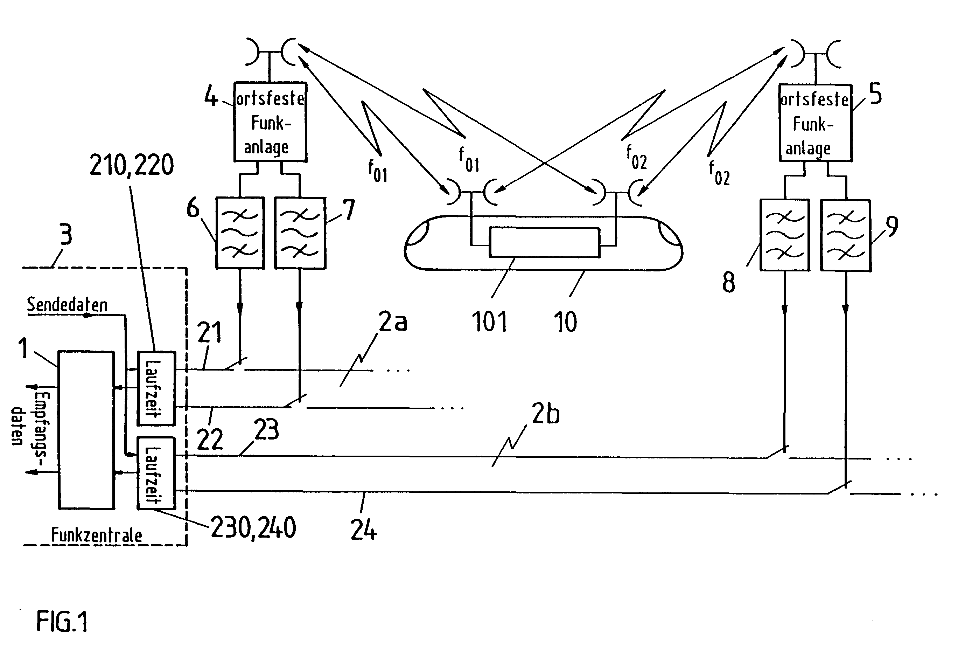

In Figur 1 ist ein Linien-Funksystem dargestellt, das als Betriebsleitfunksystem für spurgebundene Fahrzeuge dient.

Das System dient der Nachrichten(Datentelegramm)übertragung zwischen mindestens einer Mobilstation 101, die (beispielhaft) in einer Lokomotive 10 angeordnet ist, und mehreren längs einer Strecke angeordneten ortsfesten Basisstationen 4..., 5..., die mit einer gemeinsamen Sende/Empfangsstation 3 ("Funkzentrale") verbunden sind.

Die Basisstation 4 (und weitere nicht gezeigte Basisstationen) ist über Bandpaßfilter 6 und 7 an einen zweikanaligen Modulationszubringer 2a mit den Empfangskanälen 21, 22 angeschlossen, während die Basisstation 5 (und weitere nicht gezeigte Basisstationen) über Bandpaßfilter 8 und 9 an einen weiteren zweikanaligen Modulationszubringer 2b mit den Empfangskanälen 23, 24 angeschlossen ist. Die beiden Modulationszubringer 2a, 2b sind über Laufzeitausgleichsschaltungen 210, 220 bzw. 230, 240 (für jeden Empfangskanal 21-24 je eine Ausgleichsschaltung) mit einer bevorzugten Ausführungsform 1 der erfindungsgemäßen Anordnung verbunden.

Ausgangsseitig ist die Anordnung 1 mit einer (nicht gezeigten) Auswerteschaltung der Funkzentrale 3 verbunden. Die von der Funkzentrale 3 an die Mobilstation 101 auszusendenden Daten werden ebenfalls über die Laufzeitausgleichsschaltungen 210-240 in die beiden Modulationszubringer 2a, 2b eingespeist. Die ortsfesten Basisstationen 4... und 5... sind entlang der Fahrstrecke der Lokomotive 10 kammartig hintereinander angeordnet, so daß die direkten Nachbarn einer Basisstation, die an einem der beiden Modulationszubringer 2a bzw. 2b angeschlossen ist, immer Basisstationen sind, die an dem jeweils anderen 2b bzw. 2a der beiden Modulationszubringer angeschlossen sind.

Die an dem einen Modulationszubringer 2a angeschlossenen Basisstationen 4... bilden eine erste Gruppe, die an dem anderen Modulationszubringer 2b angeschlossenen Basisstationen 5... bilden eine zweite Gruppe.

Die Basisstationen 4... der ersten Gruppe senden Funksignale auf einer ersten Frequenz fₒ₁ und die Basisstationen 5... der zweiten Gruppe senden Funksignale auf einer zweiten Frequenz fₒ₂ aus, während die Mobilstation 101 Funksignale auf einer dritten und vierten Frequenz fₒ₃, fₒ₄ aussendet (in der Figur nicht gezeigt) und die Funksignale der ortsfesten Basisstationen 4... und 5... auf der ersten und zweiten Frequenz (fₒ₁, fₒ₂) empfängt. Die Basisstationen 4... und 5... beider Gruppen empfangen die (nicht gezeigten) Funksignale der Mobilstation 101 auf der dritten und vierten Frequenz fₒ₃ und fₒ₄.

Da die Sende/Empfangsantennen der Basisstationen 4... bzw. 5... und die der Mobilstation 101 einen ausreichenden räumlichen Abstand voneinander haben, ergibt sich somit eine vierfache Ortsdiversity, bei der die Basisstationen 4... und 5... bzw. die Mobilstation 101 auf verschiedene Frequenzen fₒ₁, fₒ₂ bzw. fₒ₃, fₒ₄ senden und jeweils auf denselben Frequenzpaaren fₒ₃ und fₒ₄ bzw. fₒ₁ und fₒ₂ empfangen. Die Empfangssignale der vier Empfangskanäle 21-24 der Basisstationen 4... und 5... werden über die beiden Modulationszubringer 2a und 2b direkt an den Empfangsteil der Funkzentrale 3, genauer gesagt an die jeweilige Datensenke (per Kanal) übertragen; dort findet in der Anordnung 1 die eigentliche Diversityumschaltung statt, derzufolge von den vier Empfangskanälen der von der Übertragungsqualität her momentan beste mit der (nicht gezeigten) Auswerteschaltung in der Funkzentrale 3 verbunden wird.

Damit auch bei größeren räumlichen Abständen zwischen den einzelnen Basisstationen eine Diversityumschaltung zwischen den einzelnen Empfangskanälen möglich ist, wird am Ort der einzelnen Datensenken mit den Laufzeitausgleichsschaltungen 210-240 ein Ausgleich der Signallaufzeit der Empfangssignale vorgenommen. Die Genauigkeit eines solchen Laufzeitausgleichs hängt in erster Linie von der Datentaktrate der zu übertragenden Datensignale ab und sollte in etwa eine Genauigkeit T ≃ Bitdauer/10 haben.

Das Funksystem ist so organisiert, daß die (mit zwei Sende/Empfangsgeräten ausgestattete) Mobilstation 101 der Lokomotive 10 während der Fahrt entlang der Strecke immer eingeschaltet ist und demgemäß die Funksignale der ortsfesten Basisstationen beider Gruppen 4 und 5 über beide Sende/Empfangsgeräte auf den Frequenzen fₒ₁ und fₒ₂ zu jeder Zeit empfangen kann bzw. jederzeit Funksignale aussenden kann (und zwar über das eine Sende/Empfangsgerät auf der Frequenz fₒ₃ und über das andere Sende/Empfangsgerät auf der Frequenz fₒ₄), während von den Basisstationen beider Gruppen 4 und 5 immer nur diejenigen Basisstationen "aktiviert" werden (d.h. Funksignale senden und empfangen können), die innerhalb der Funkreichweite der Mobilstation 101 liegen.

Die Funkreichweiten der Mobilstation 101 bzw. der Basisstationen beider Gruppen 4 und 5 sind dabei so bemessen, daß die Mobilstation 101 mindestens mit den beiden jeweils nächstliegenden (und damit untereinander direkt benachbarten) Basisstationen längs der Strecke in Funkverbindung stehen kann.

Hieraus folgt, daß die Mobilstation 101 bei ungestörtem Betrieb des Funksystems immer vier Funksignale empfängt, die von dem jeweils aktivierten Basisstationspaar herstammen; zwei Signale empfängt die Mobilstation 101 dabei über ihr eines Sende/Empfangsgerät und zwei Signale über ihr zweites Sende/Empfangsgerät. Da die Basisstationen des jeweils aktivierten Basisstationspaares immer unterschiedlichen Gruppen angehören, empfangen beide Sende/Empfangsgeräte der Mobilstation 101 somit immer zwei Signale unterschiedlicher Frequenz gleichzeitig, nämlich ein Signal auf der Frequenz fₒ₁, das von der jeweils aktivierten (d.h. nächstliegenden) Basisstation der ersten Gruppe 4 herstammt, und ein Signal auf der Frequenz fₒ₂, das von der jeweils aktivierten (d.h. nächstliegenden) Basisstation der zweiten Gruppe 5 herstammt. Umgekehrt empfängt jede der beiden jeweils aktivierten Basisstationen jeweils zwei Funksignale der Mobilstation 101 auf unterschiedliche Frequenzen, nämlich ein Funksignal auf der Frequenz fₒ₃, das von dem einen Sende/Empfangsgerät der Mobilstation 101 herstammt, und ein Funksignal auf der Frequenz fₒ₄, das von dem anderen Sende/Empfangsgerät der Mobilstation 101 herstammt.

Für den Fall, daß nicht nur zu einer Lokomotive Funkkontakt gehalten werden muß, sondern zu mehreren Lokomotiven (die sich längs der gleichen Strecke bewegen), kann vorgesehen werden, daß die Mobilstation der einzelnen Lokomotiven in der oben geschilderten Weise nach dem Zeitmultiplexverfahren mit der Funkzentrale in Funkkontakt stehen.

Befinden sich beispielsweise drei Lokomotiven auf einer von (beispielhaft) sechs Basisstationen ausgeleucheteten Strecke, von denen beispielsweise die ersten beiden benachbarten Basisstationen in Funkreichweite der Mobilstation der ersten Lokomotive stehen bzw. die nächsten beiden benachbarten Basisstationen in Funkreichweite der Mobilstation der zweiten Lokomotive bzw. die letzten beiden benachbarten Basisstationen in Funkreichweite der Mobilstation der dritten Lokomotive, so würde in diesem Fall die Mobilstation der ersten Lokomotive in einem ersten Zeitschlitz in Funkkontakt mit der Funkzentrale stehen, die Mobilstation der zweiten Lokomotive entsprechend in einem dem ersten Zeitschlitz nachfolgenden zweiten Zeitschlitz und die Mobilstation der dritten Lokomotive entsprechend in einem dem zweiten Zeitschlitz nachfolgenden dritten Zeitschlitz. Innerhalb der einzelnen Zeitschlitze läuft die Funkkommunikation zwischen der jeweiligen Lokomotive und der Funkzentrale in der oben beschriebenen Weise ab.

Bei dieser Weiterbildung muß durch an sich bekannte und hier nicht weiter erläuterte Maßnahmen natürlich sichergestellt sein, daß zum einen die Funkreichweite der mobilen und ortsfesten Stationen (d.h. deren Sendeleistung bzw. Empfangsempfindlichkeit) so bemessen ist, daß eine Funkverbindung zwischen einer Mobilstation und den beiden dieser Mobilstation räumlich am nächsten liegenden Basisstationen möglich ist. Da hier ein Zeitmultiplexverfahren verwendet wird, bei dem den einzelnen Lokomotiven jeweils eine bestimmte Adresse und ein bestimmter Zeitschlitz zugeordnet sind, ist die Einhaltung eines Mindestabstands zwischen den Lokomotiven nicht erforderlich.

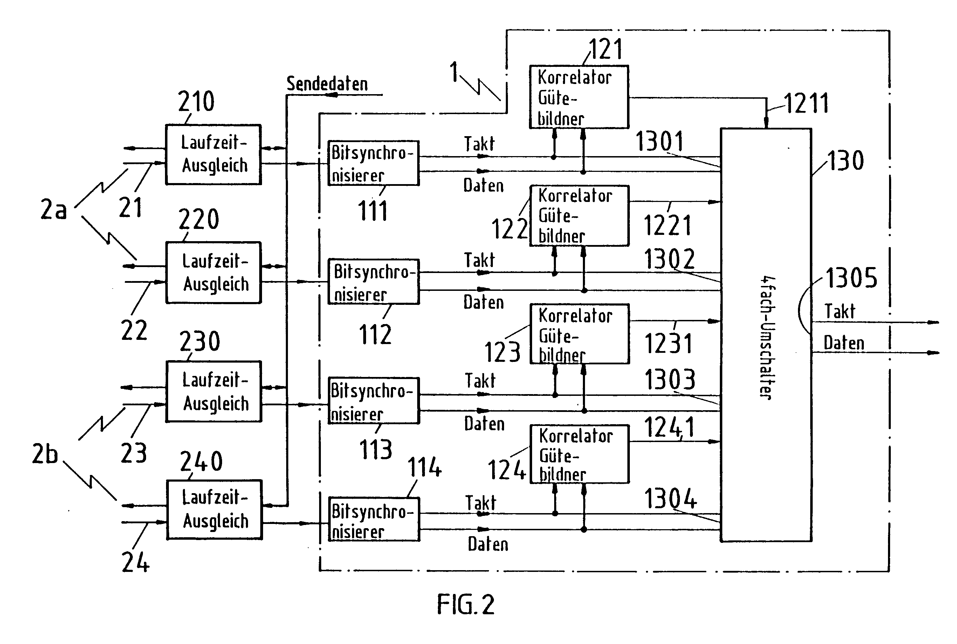

In FIG. 2 ist eine bevorzugte Ausführungsform der erfindungsgemäßen Anordnung zum Durchführen des erfindungsgemäßen Verfahrens gezeigt. Die Anordnung 1 ist eingangsseitig (beispielhaft) mit zwei zweikanaligen Modulationszubringern 2a und 2b, d.h. mit (beispielhaft) insgesamt vier Empfangskanälen 21-24 und ausgangsseitig mit einer (nicht gezeigten) Auswerteschaltung verbunden.

Die Anordnung 1 besteht aus vier Datenbitsynchronisiereinheiten 111-114, vier Korrelationsschaltungen 121-124 sowie einem 4-fach-Diversityumschalter 130, der auch eine (nicht gezeigte und für alle Empfangskanäle 21-24 gemeinsame) Vergleichs- und Steuereinheit enthält.

Jeder der vier Empfangskanäle 21-24 ist über eine kanaleigene Laufzeitausgleichsschaltung 210-240 mit einem der vier Datenbitsynchronisiereinheiten 111-114 verbunden. Jede der Datenbitsynchronisiereinheiten 111-114 wiederum ist ausgangsseitig mit einem der vier Eingänge 1301-1304 des Diversityumschalters 130 sowie mit einer von den vier Korrelationsschaltungen 121-124 verbunden. Die Verbindung ist dabei jeweils in zwei Leitungen aufgespalten, nämlich in eine für die Datentaktrate ("Takt") und in eine für die Datensignale ("Daten") selbst. Dementsprechend sind die Ausgänge der Datenbitsynchronisiereinheiten 111-114, die Eingänge der Korrelationsschaltungen 121-124 sowie die Eingänge 1301-1304 des Diversityumschalters 130 "doppelt" ausgelegt. Die Korrelationsschaltungen 121-124 sind mit ihren Ausgängen 1211-1241 an die (im Diversityumschalter enthaltene und nicht gezeigte) Vergleichs- und Steuereinheit angeschlossen, die ihrerseits ausgangsseitig mit dem (ebenfalls nicht gezeigten) Steuereingang des Diversityumschalters 130 verbunden ist.

Der Ausgang 1305 des Diversityumschalters 130 ist ebenfalls in zwei Leitungen aufgespalten, nämlich in eine für die Datentaktrate ("Takt") und eine für die Datensignale ("Daten") selbst.

Die von der Funkzentrale (3 in FIG. 3) auszusendenden Daten ("Sendedaten") werden, wie FIG. 1 und FIG. 2 zeigen, ebenfalls über die Laufzeitausgleichsschaltungen 210-240 in die vier Sendekanäle der beiden Modulationszubringer 2a und 2b eingespeist und den Basisstationen (4,...; 5,... in FIG. 1) zugeleitet und von dort als Funksignale ausgesendet.

Die Anordnung 1 funktioniert wie folgt: nachdem die Laufzeitunterschiede in den vier Empfangskanälen 21-24 durch die entsprechend eingestellte Laufzeitausgleichsschaltungen 210-240 zumindest soweit kompensiert worden sind, daß die empfangenen Datensignale mit ausreichender Genauigkeit "zeitgleich" an den Datenbitsynchronisiereinheiten 111-114 anliegen, wird in diesen Einheiten 111-114 als erstes die Datentaktrate aus den anliegenden Datensignalen der einzelnen Empfangskanälen 21-24 zurückgewonnen. Dies wird durch den Einsatz eines hierfür geeigneten Datencodes, z.B. des Manchestercodes erreicht. Im Anschluß daran werden die synchronisierten Datensignale und die ermittelte Datentaktrate über die getrennten Leitungen den Korrelationsschaltungen 121-124 zugeführt. Dort wird eine Kreuzkorrelation über jedes einzelne Datenbit errechnet, und zwar separat für jeden einzelnen Empfangskanal 21-24. Die resultierenden Korrelationswerte der vier Kanäle 21-24 stellen Gütewerte dar, die Informationen über die Qualität, d.h. den Grad der Verzerrung eines jeden einzelnen Datenbits in den einzelnen Empfangskanälen 21-24 enthalten. Die Korrelationswerte der einzelnen Datenbits in den vier Empfangskanälen 21-24 werden anschließend in der Vergleichs- und Steuereinheit miteinander verglichen. Bei dem Vergleich wird für jedes einzelne Datenbit der beste Korrelationswert aus den vier anliegenden Korrelationswerten bestimmt. Anschließend wird der Diversityumschalter 130 (der immer nur einen der vier Empfangskanäle 21-24 mit der Auswerteschaltung verbinden kann und der von der Vergleichs- und Steuereinheit angesteuert wird) von der Vergleichs- und Steuereinheit so geschaltet, daß der Empfangskanal mit dem jeweils besten Korrelationswert für das (in allen vier Empfangskanälen 21-24 in etwa zeitgleich) anliegende Datenbit mit der Auswerteschaltung verbunden wird, d.h. es wird derjenige Empfangskanal ausgewählt, der das am wenigsten verzerrte Datenbit enthält.

Nachdem die Verbindung für das anliegende Datenbit hergestellt und das Datenbit des ausgewählten Empfangskanals der Auswerteschaltung über den Diversityumschalter 130 zugeleitet worden ist, wiederholt sich die Auswahlprozedur für das nächste anliegende Datenbit usw. Mit der Anordnung 1 kann somit aus den vier vorhandenen und voneinander unabhängigen Empfangskanälen 21-24 ein optimaler Datenkanal gebildet werden, bei dem die empfangenen und an die Auswerteschaltung weitergeleiteten Datensignale den (den Umständen entsprechend) jeweils geringsten Verzerrungsgrad aufweisen. Die Umschaltung zwischen den einzelnen Empfangskanälen 21-24 in dem Diversityumschalter 130 erfolgt synchron mit der Auswertung der Korrelationswerte der einzelnen Datenbits für jedes einzelne Datenbit. Es können jedoch auch mehrere aufeinanderfolgende Datenbits zu Paketen zusammengefaßt werden, für die dann der oben geschilderte Optimierungsprozeß abläuft, so daß Umschaltungen zwischen den einzelnen Kanälen 21-24 nur noch "paketweise" erfolgen (d.h. jeweils nur nach Übertragung eines kompletten Datensignalpakets).

Es versteht sich, daß die Erfindung nicht auf die geschilderten Ausführungsbeispiele beschränkt ist, sondern vielmehr auf weitere übertragbar ist. So ist es z.B. möglich, die Kreuzkorrelationen in den einzelnen Empfangskanälen bzw. den anschließenden Vergleich der resultierenden Korrelationswerte in einem für alle Empfangskanäle gemeinsamen Rechner durchzuführen, der die Korrelationsschaltungen (121-124 in FIG. 2) bzw. die Vergleichs- und Steuereinheit ersetzen würde. Ferner ist die Zahl der Empfangskanäle nicht auf m=4 beschränkt. Schließlich können anstelle des Manchestercodes auch andere geeignete Datencodes, z.B. NRZ (No-Return-to-Zero)-Codes (vgl. hierzu z.B. das weiter oben bereits zitierte "Telecommunications Technology Hand-book", Seiten 482-483, von Daniel Minoli) verwendet werden.

## Patentansprüche

1. Verfahren zur Verringerung der Bitfehlerrate bei der Übertragung digitaler Daten über Funk mittels eines m-kanaligen Funksystems mit m>2, dadurch gekennzeichnet,
- daß in den einzelnen m Empfangskanälen:
- zunächst aus den geträgerten Empfangssignalen die übertragenen Datensignale extrahiert werden;
- anschließend die Datentaktrate ermittelt wird;
- anschließend anhand der Datensignale und der Datentaktrate eine Kreuzkorrelation für jedes Datenbit oder für einen Teil der Datenbits errechnet wird;
- daß im Anschluß daran für jedes Datenbit oder für einen Teil der Datenbits die resultierenden Kreuzkorrelationswerte der einzelnen Empfangskanäle miteinander verglichen werden und
für die weitere Verarbeitung des bzw. der Datenbits derjenige der m Empfangskanäle ausgewählt wird, der den höchsten Kreuzkorrelationswert für dieses Datenbit bzw.diese Datenbits aufweist.

2. Verfahren nach Anspruch 1, dadurch gekennzeichnet, daß Laufzeitunterschiede der Signale in den einzelnen Empfangskanälen vor der Ermittlung der Datentaktrate kompensiert oder zumindest weitgehend kompensiert werden.

3. Verfahren nach einem der Ansprüche 1 oder 2, dadurch gekennzeichnet, daß bei der Durchführung der Kreuzkorrelationsberechnungen als Datencode der Manchestercode verwendet wird.

4. M-kanaliges Funksystem mit einer Anordnung zum Durchführen des Verfahrens nach einem der vorhergehenden Ansprüche, bei dem m Empfangskanäle auf eine gemeinsame Auswerteschaltung geschaltet sind mit m>2, mit Demodulatoren, die aus den geträgerten Empfangssignalen die übertragenen Datensignale extrahieren, dadurch gekennzeichnet,
- daß ein mindestens m-facher Diversityumschalter (130) mit mindestens m Eingängen (1301-1304), mindestens einem Steuereingang und mindestens einem Ausgang (1305) vorgesehen ist;
- daß jeder der m Empfangskanäle (21-24) über eine kanaleigene Datenbitsynchronisiereinheit (111-114), die die Datentaktrate ermittelt, mit einem der mindestens m Eingänge (1301-1304) des Diversityumschalters (130) und mit einer von mindestens m Korrelationsschaltungen (121-124) verbunden ist;
- daß jede der mindestens m Korrelationsschaltungen (121-124) ausgangsseitig (1211-1241) mit mindestens einer Vergleichs- und Steuereinheit, vorzugsweise mit einer gemeinsamen Vergleichs- und Steuereinheit verbunden ist;
- daß die gemeinsame oder mindestens eine Vergleichs- und Steuereinheit ausgangsseitig mit dem mindestens einen Steuereingang des Diversityumschalters (130) verbunden ist;
- daß der Diversityumschalter (130) ausgangsseitig mit der Auswerteschaltung verbunden ist.

5. FUNKSYSTEM nach Anspruch 4, dadurch gekennzeichnet, daß in den einzelnen Empfangskanälen (21-24) die Verschaltung der Datenbitsynchronisiereinheit (111-114), der Korrelationsschaltung (121-124) und des zugehörigen Eingangs (1301-1304) des Diversityumschalters (130) sowie dessen Anschluß (1305) an die Auswerteschaltung jeweils mit separaten Verbindungsleitungen für die Datensignale bzw. Daten einerseits und die Datentaktrate bzw. Takt andererseits realisiert ist.

6. FUNKSYSTEM nach Anspruch 5, dadurch gekennzeichnet, daß die mindestens m Korrelationsschaltungen (121-124) jeweils als Kreuzkorrelationsschaltungen zur Kreuzkorrelation der Datensignale und der Datentaktrate des jeweiligen Empfangskanals (21-24) realisiert sind.

7. FUNKSYSTEM nach einem der Ansprüche 4 bis 6, dadurch gekennzeichnet, daß die m Korrelationsschaltungen (121-124) und/oder die gemeinsame oder mindestens eine Vergleichs- und Steuereinheit durch einen Rechner ersetzt sind bzw. ist.

8. FUNKSYSTEM nach einem der Ansprüche 4 bis 7, dadurch gekennzeichnet, daß den m Datenbitsynchronisiereinheiten (111-114) eingangsseitig jeweils eine Signallaufzeitausgleichsschaltung (210-240) vorgeschaltet ist.

9. M-kanaliges Funksystem, insbesondere m-kanaliges Linienfunksystem mit n entlang einer Strecke angeordneten ortsfesten und mit einer gemeinsamen Funkzentrale verbundenen Basisstationen und mindestens einer in Funkverbindung mit diesen ortsfesten Basisstationen stehenden Mobilstation, welches Funksystem nach dem Verfahren nach einem der Ansprüche 1 bis 3 arbeitet und/oder ALS FUNKSYSTEM nach einem der Ansprüche 4 bis 8 AUSGEBILDET ist.

10. Verwendung des M-kanaligen Linienfunksystems nach Anspruch 9, als Betriebsleitfunksystem für weg-, insbesondere spurgebundene Fahrzeuge, insbesondere für Eisenbahnen oder Magnet-Schwebebahnen.

## Claims

1. Method for reducing the bit error rate in the transmission of digital data by radio, by means of an m-channel radio system with m>2, characterised in that,
- in the individual m receiving channels:
- first the transmitted data signals are extracted from the carriered received signals;
- the data clock rate is then ascertained;
- a cross-correlation is then calculated, for each data bit or for some of the data bits, on the basis of the data signals and the data clock rate;
- subsequently the resulting cross-correlation values of the individual receiving channels are compared with one another for each data bit or for some of the data bits and,
- for the further processing of the data bit(s), the receiving channel from among the m receiving channels that has the highest cross-correlation value for that data bit or those data bits is selected.

2. Method according to claim 1, characterised in that transit time differences of the signals in the individual receiving channels are compensated for or at least largely compensated for before the data clock rate is ascertained.

3. Method according to either claim 1 or claim 2, characterised in that the Manchester code is used as the data code when the cross-correlation calculations are carried out.

4. M-channel radio system having an arrangement for carrying out the method according to any one of the preceding claims, in which m receiving channels are switched to a common evaluating circuit with m>2, with demodulators which extract the transmitted data signals from the carriered received signals, characterised in that
- an at least m-fold diversity changeover switch (130) having at,least m inputs (1301-1304), at least one control input and at least one output (1305) is provided;
- each of the m receiving channels (21-24) is connected by way of its own data bit synchronisation unit (111-114), which ascertains the data clock rate, to one of the at least m inputs (1301-1304) of the diversity changeover switch (130) and to one of at least m correlation circuits (121-124);
- each of the at least m correlation circuits (121-124) is connected on the output side (1211-1241) to at least one comparison and control unit, preferably to a common comparison and control unit;
- the common or at least one comparison and control unit is connected on the output side to the at least one control input of the diversity changeover switch (130);
- the diversity changeover switch (130) is connected on the output side to the evaluating circuit.

5. Radio system according to claim 4, characterised in that, in the individual receiving channels (21-24), the connecting-up of the data bit synchronisation unit (111-114), the correlation circuit (121-124) and the associated input (1301-1304) of the diversity changeover switch (130) and the connection (1305) thereof to the evaluating circuit is effected with separate connecting lines for the data signals, or data, on the one hand, and the data clock rate, or clock, on the other hand.

6. Radio system according to claim 5, characterised in that the at least m correlation circuits (121-124) are in the form of cross-correlation circuits for the cross-correlation of the data signals and the data clock rate of the respective receiving channel (21-24).

7. Radio system according to any one of claims 4 to 6, characterised in that the m correlation circuits (121-124) and/or the common or at least one comparison and control unit is/are replaced by a computer.

8. Radio system according to any one of claims 4 to 7, characterised in that a respective signal transit time compensation circuit (210-240) is connected upstream of the input side of each of the m data bit synchronisation units (111-114).

9. M-channel radio system, especially m-channel line radio system having n stationary base stations which are arranged along a route and which are connected to a common master radio station, and at least one mobile station which is in radio connection with those stationary base stations, which radio system operates in accordance with the method according to any one of claims 1 to 3 and/or is in the form of a radio system according to any one of claims 4 to 8.

10. Use of the m-channel line radio system according to claim 9, as an operations-control radio system for path-bound, especially track-bound, vehicles, especially for railways or magnetic levitation tracks.

## Revendications

1. Procédé de réduction du taux d'erreurs sur les bits lors de la transmission de données numériques par radio au moyen d'un système radio à m canaux avec m > 2, caractérisé en ce que
- dans les m canaux récepteurs individuels :
- on extrait d'abord des signaux reçus avec porteuse les signaux de données transmis ;
- on détermine ensuite l'horloge des données ;
- on calcule ensuite à l'aide des signaux de données et de l'horloge de données une intercorrélation pour chaque bit de données ou pour une partie des bits de données ;
- ensuite, pour chaque bit de données ou pour une partie des bits de données, on compare entre elles les valeurs d'intercorrélation résultantes des canaux récepteurs individuels
et on sélectionne pour la suite du traitement du bit de données ou des bits de données celui des m canaux récepteurs qui a la plus grande valeur d'intercorrélation pour ce bit de données ou ces bits de données.

2. Procédé selon la revendication 1, caractérisé en ce qu'on compense ou on compense au moins largement des différences de temps de propagation des signaux dans les différents canaux récepteurs avant la détermination de l'horloge de données.

3. Procédé selon l'une des revendications. 1 ou 2, caractérisé en ce qu'on utilise le code de Manchester comme code de données lors de la mise en oeuvre des calculs d'intercorrélation.

4. Système radio à m canaux avec un dispositif pour la mise en oeuvre du procédé selon l'une des revendications précédentes, dans lequel m canaux récepteurs sont branchés sur un circuit d'évaluation commun, avec m > 2, avec des démodulateurs qui extraient des signaux reçus avec porteuse les signaux de données transmis, caractérisé en ce que
- il est prévu un commutateur en diversité (130) multiple au moins m fois avec au moins m entrées (1301 à 1304), avec au moins une entrée de commande et avec au moins une sortie (1305) ;
- chacun des m canaux récepteurs (21 à 24) est relié par l'intermédiaire d'une unité de synchronisation de bits de données (111 à 114), propre au canal, qui détermine l'horloge de données, à l'une des au moins m entrées (1301 à 1304) du commutateur en diversité (130) et à l'un des au moins m circuits de corrélation (121 à 124) ;
- chacun des au moins m circuits de corrélation (121 à 124) est relié en sortie (1211 à 1241) à au moins une unité de comparaison et de commande, de préférence à une unité de comparaison et de commande commune ;
- l'unité de comparaison et de commande commune ou la ou les unités de comparaison et de commande est reliée en sortie à la ou les entrées de commande du commutateur en diversité (130) ;
- le commutateur en diversité (130) est relié en sortie au circuit d'évaluation.

5. Système radio selon la revendication 4,
caractérisé en ce que, dans les différents canaux récepteurs (21 à 24), le branchement de l'unité de synchronisation de bits de données (111 à 114), du circuit de corrélation (121 à 124) et de l'entrée associée (1301 à 1304) du commutateur en diversité (130) ainsi que de son raccordement (1305) au circuit d'évaluation est mis en oeuvre à chaque fois avec des lignes de liaison séparées pour les signaux de données ou données d'une part et pour l'horloge de données ou horloge d'autre part.

6. Système radio selon la revendication 5,
caractérisé en ce que les au moins m circuits de corrélation (121 à 124) sont mis en oeuvre à chaque fois comme des circuits d'intercorrélation destinés à l'intercorrélation des signaux de données et de l'horloge de données du canal récepteur respectif (21 à 24).

7. Système radio selon l'une des revendications' 4 à 6, caractérisé en ce que les m circuits de corrélation (121 à 124) et/ou l'unité de comparaison et de commande ou la ou les unités de comparaison et de commande est ou sont remplacés par un calculateur.

8. Système radio selon l'une des revendications 4 à 7, caractérisé en ce qu'un circuit de compensation de temps de propagation (210 à 240) est branché à chaque fois en amont, côté entrée, des m unités de synchronisation de bits de données (111 à 114).

9. Système radio à m canaux, notamment système radio de ligne à m canaux, avec n stations de base fixes agencées le long d'une voie et reliées à un central radio commun et avec au moins une station mobile en liaison radio avec ces stations de base fixes, lequel système radio travaille selon le procédé selon l'une des revendications 1 à 3 et/ou est conçu comme système radio selon l'une des revendications 4 à 8.

10. Utilisation du système radio de ligne à m canaux selon la revendication 9 comme système radio de contrôle pour des véhicules liés à des trajets, notamment des véhicules guidés, notamment pour des véhicules de chemin de fer ou pour des véhicules à sustentation magnétique.
